# EUROPÄISCHE PATENTSCHRIFT

(11) **EP 4 124 536 B1**
(45) Veröffentlichungstag und Bekanntmachung des Hinweises auf die Patenterteilung: **13.11.2024**
(21) Anmeldenummer: 22175448.4
(22) Anmeldetag: 25.05.2022
(51) Int. Cl.: B61D 17/04, H01R 4/02, H01R 4/66, B23K 9/20, B23K 35/02

(54) **VERFAHREN ZUM HERSTELLEN EINER EINEN WAGENKASTEN UND EIN ANSCHLUSSELEMENT AUFWEISENDEN ANORDNUNG**
METHOD FOR MANUFACTURING AN ASSEMBLY COMPRISING A VEHICLE BODY AND A CONNECTING ELEMENT
PROCÉDÉ DE FABRICATION D'UNE CAISSE DE WAGON ET ENSEMBLE COMPRENANT UN ÉLÉMENT DE RACCORDEMENT

(30) Priorität: 26.07.2021 DE 102021208007
(43) Veröffentlichungstag der Anmeldung: 01.02.2023
(73) Patentinhaber: Siemens Mobility GmbH, 81739 München (DE)
(72) Erfinder: Worsch, Marcus, 91090 Effeltrich (DE)
(74) Vertreter: Siemens Patent Attorneys

(56) Entgegenhaltungen:
- EP-A1- 3 610 965
- WO-A1-2017/041919
- DE-A1- 102011 001 502
- DE-A1- 102017 102 564
- DE-A1- 4 221 852
- DE-U1- 20 019 602
- DE-U1- 29 908 831
- DE-U1- 29 911 121

## Beschreibung

Die Erfindung bezieht sich auf ein Verfahren zum Herstellen einer Anordnung, die einen Wagenkasten eines Schienenfahrzeugs und ein daran angebrachtes Anschlusselement umfasst.

Im Bereich der Eisenbahntechnik ist es bekannt, Anschlusselemente in Form von Erdungslaschen an Aluminiumrohbauten eines Wagenkastens des späteren Schienenfahrzeugs anzuschweißen. Bei den vorbekannten Erdungslaschen handelt es sich um sogenannte Cupallaschen, die einen inneren Aluminiumkern aufweisen, der außen mit einem Kupfermantel ummantelt ist. Der Kupfermantel wiederum ist mit einem Zinnüberzug versehen, der die Beständigkeit des Kupfermantels gegen Korrosion verbessert. Um die vorbekannten Cupallaschen mit dem Wagenkasten verschweißen zu können, werden diese nach der Kupferummantelung und dem Aufbringen des Zinnüberzugs zunächst im Fußbereich, also im späteren Schnittstellenbereich zum Wagenkasten, abgefräst, um das Aluminium für den Schweißschritt freizulegen. Es ist ersichtlich, dass die beschriebene Vorgehensweise sehr aufwändig ist.

Cupallaschen der beschriebenen Art lassen sich außerdem nicht ohne weiteres auf dünne Bleche des Wagenkastens aufschweißen, da eine thermische Überlastung auftreten kann; aus diesem Grunde werden Cupallaschen üblicherweise nur in ausreichend verstärkten Wagenkastenbereichen angeschweißt.

Aus der DE 42 21 852 A1 ist ein Verfahren zum Aufbringen von Versteifungsprofilen um Öffnungen in hautbildenden Dünnblechen, insbesondere zur Befestigung von Fenstern bei Seiten- und Stirnwänden von Fahrzeugen, bekannt.

Aus der DE 200 19 602 U1 ist ein Schweißbolzen mit einem Anschweißabschnitt und einem Funktionsabschnitt bekannt, wobei die Bolzenabschnitte fest miteinander verbunden sind.

Der Erfindung liegt die Aufgabe zugrunde, ein Verfahren der oben beschriebenen Art zu verbessern.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass als Anschlusselement ein Bolzen angebracht wird, wobei der Bolzen einen Schnittstellenabschnitt, der aus Aluminium besteht und zum Anbringen an dem Wagenkasten dient, und einen Anschlussabschnitt, der aus einem korrosionsbeständigen Stahl besteht und zum Anbringen einer Schienenfahrzeugkomponente dient, umfasst und der Bolzen mit seinem Schnittstellenabschnitt im Rahmen eines Schweißverfahrens an den Wagenkasten angeschweißt wird.

Ein wesentlicher Vorteil des erfindungsgemäßen Verfahrens ist darin zu sehen, dass ein Anschweißen von Bolzen quasi an beliebigen Stellen am Wagenkasten möglich ist, auch im Bereich sehr dünner Blechabschnitte. Es bestehen kaum räumliche Einschränkungen, anders als bei den oben beschriebenen Cupallaschen.

Ein weiterer wesentlicher Vorteil des erfindungsgemäßen Verfahrens ist darin zu sehen, dass der stahlbeschichtete Anschlussabschnitt des Bolzens mechanisch deutlich stabiler ist als beispielsweise der bei Cupallaschen vorgesehene Kupfer-Zinn-Überzug. Auch bei hoher mechanischer Belastung beispielsweise während der Montage, insbesondere beim Anschwei-ßen der Bolzen, bleibt der Anschlussabschnitt mit hoher Wahrscheinlichkeit unbeschädigt, wodurch die Langlebigkeit der durch das erfindungsgemäße Verfahren gebildeten Anordnung deutlich verbessert wird.

Der korrosionsbeständige Stahl ist vorzugsweise ein austenitischer Stahl oder Duplex-Stahl.

Der Bolzen wird mit seinem Schnittstellenabschnitt vorzugsweise im Rahmen eines Bolzenschweißverfahrens an ein Blech, insbesondere Aluminiumblech, des Wagenkastens angeschweißt. Unter einem Bolzenschweißverfahren wird dabei ein Verfahren verstanden, bei dem die thermische Hitze zum Schweißen an der Schnittstelle zwischen dem Bolzen und dem Wagenkasten durch einen Stromfluss hervorgerufen wird, der in den Bolzen eingespeist wird und diesen durchfließt. Der Bolzen arbeitet sozusagen im Rahmen des Schweißverfahrens selbst als Schweißelektrode.

Bei dem Verfahren umfasst der Bolzen erfindungsgemäß ein Aluminiumvollbolzenelement, das vor dem Verschweißen unter Bildung des Anschlussabschnitts mit einer Korrosionsschutzschicht aus dem genannten korrosionsbeständigen Stahl beschichtet wird, wobei der Schnittstellenabschnitt des Aluminiumvollbolzenelements unbeschichtet bleibt.

Das Beschichten erfolgt vorzugsweise durch Plasmabeschichten, Laserbeschichten oder Drucken.

Das Aluminiumvollbolzenelement weist im Bereich des stahlbeschichteten Anschlussabschnitts vorzugsweise ein Innengewinde auf, das in das Aluminiumvollbolzenelement in Bolzenlängsrichtung hineinragt.

Das Innengewinde wird vorzugsweise zumindest im Bereich der obersten Gewindeumdrehung mit dem korrosionsbeständigen Stahl mitbeschichtet.

Nach dem Anschweißen des Bolzens an dem Wagenkasten werden der unbeschichtete Abschnitt des Aluminiumvollbolzenelements, die Schnittstelle zwischen dem stahlbeschichteten und dem unbeschichteten Abschnitt des Aluminiumvollbolzenelements sowie der an die Schnittstelle heranragende, nahe Bereich des stahlbeschichteten Abschnitts des Aluminiumvollbolzenelements vorzugsweise lackiert. Der durch den nahen Bereich von der Schnittstelle getrennte ferne Bereich des stahlbeschichteten Aluminiumvollbolzenelements bleibt dabei vorzugsweise unlackiert. Mit Hilfe des Lackierschritts lässt sich das Aluminiumvollbolzenelement in einfacher Weise vor Korrosion schützen.

Bei einer anderen bevorzugten Ausgestaltung des Verfahrens ist vorgesehen, dass der Bolzen zumindest zweiteilig ist und aufweist: ein Aluminiumteil, das den Schnittstellenabschnitt des Bolzens umfasst oder bildet, und ein Stahlteil aus dem korrosionsbeständigen Stahl, der den Anschlussabschnitt des Bolzens umfasst oder bildet.

Das Stahlteil weist im Bereich des Anschlussabschnitts vorzugsweise ein Innengewinde auf, das in Bolzenlängsrichtung in das Stahlteil hineinragt.

Nach dem Anschweißen des Bolzens an dem Wagenkasten werden das Aluminiumteil, die Schnittstelle zwischen dem Aluminiumteil und dem Stahlteil sowie der an die Schnittstelle heranragende, nahe Bereich des Stahlteils vorzugsweise lackiert. Der durch den nahen Bereich von der Schnittstelle getrennte ferne Bereich des Stahlteils bleibt vorzugsweise unlackiert.

Das Aluminiumteil und das Stahlteil können in vorteilhafter Weise durch Schweißen, insbesondere Reibschweißen verbunden werden, bevor der dadurch gebildete Bolzen an den Wagenkasten angeschweißt wird.

Alternativ können das Aluminiumteil und das Stahlteil in vorteilhafter Weise miteinander verschraubt oder verklemmt werden, bevor der Bolzen an den Wagenkasten angeschweißt wird.

Der Schnittstellenabschnitt ist vorzugsweise zumindest abschnittsweise zylindrisch ist und weist dort einen ersten Querschnitt auf.

Der Anschlussabschnitt ist vorzugsweise zumindest abschnittsweise zylindrisch ist und weist dort einen zweiten Querschnitt auf.

Der zweite Querschnitt ist vorzugsweise größer als der erste Querschnitt. Weisen der Anschlussabschnitt und der Schnittstellenabschnitt einen kreisförmigen Querschnitt auf, so ist der Durchmesser des Anschlussabschnitts vorzugsweise größer als der des Schnittstellenabschnitts.

Zwischen dem Schnittstellenabschnitt und dem Anschlussabschnitt ist vorzugsweise ein konischer Verbindungsabschnitt angeordnet.

Besonders vorteilhaft ist es, wenn der Schnittstellenabschnitt des Bolzens vor dem Schweißen in seinem späteren Schweißbereich eine ringförmig umlaufende Außenrandfläche aufweist, die abgerundet ist und einen zylindrischen Unterabschnitt des Schnittstellenabschnitts und einen konischen Unterabschnitt des Schnittstellenabschnitts verbindet, und unter Einbezug des Aluminiummaterials im Bereich der abgerundeten Außenrandfläche beim Schweißen eine umlaufende Aluminiumschweißnaht gebildet oder zumindest mitgebildet wird. Die ringförmig umlaufende Außenrandfläche vermindert in vorteilhafter Weise beim Schweißen den sogenannten Blaseffekt, da ein Aufweiten des Lichtbogens und Flattereffekte reduziert werden.

Der Rundungsradius der Rundung der abgerundeten Außenrandfläche ist vorzugsweise zumindest größer als 1 mm, besonderes bevorzugt liegt er zwischen 2 und 4 mm.

Bei dem Bolzen handelt es sich vorzugsweise um einen Großflanschbolzen, dessen Fußdurchmesser im Schnittstellenabschnitt zwischen 10 mm und 20 mm liegt. Der Kopfdurchmesser des Bolzens im Anschlussabschnitt liegt vorzugsweise zwischen 30 mm und 40 mm.

Bolzen der beschriebenen Art können in vorteilhafter Weise auf Bleche mit Blechdicken unter 3 mm Dicke aufgeschweißt werden, anders als herkömmliche Cupallaschen, die wie erläutert, höhere Blechdicken oder verstärkte Bereiche unter den Blechen erfordern.

Der Bolzen wird vorzugsweise als Erdungsbolzen eingesetzt, indem an diesen als Schienenfahrzeugkomponente ein Erdungskabel angeschlossen wird, insbesondere durch Einschrauben einer Schraube in das Innengewinde des Anschlussabschnitts des Bolzens. Alternativ können die Bolzen auch zum Anbringen anderer Schienenfahrzeugkomponenten dienen, beispielsweise von Verkleidungsteilen, Geräten oder Gepäckablagen.

Bolzen, die mit einem Fußdurchmesser über 14 mm in der beschriebenen Weise auf 3 mm dicke Bleche geschweißt werden, können - wie erfinderseitig festgestellt wurde - in vorteilhafter Weise Zugkräfte über 8 kN übertragen, woraus sich die genannten, aber auch viele weitere Anwendungsmöglichkeiten ableiten lassen.

Die Erfindung bezieht sich darüber hinaus auf eine Anordnung, die einen Wagenkasten eines Schienenfahrzeugs und ein daran angebrachtes Anschlusselement umfasst. Erfindungsgemäß ist bezüglich einer solchen Anordnung vorgesehen, dass das Anschlusselement ein Bolzen ist, der Bolzen einen Schnittstellenabschnitt, der aus Aluminium besteht und an dem Wagenkasten angebracht ist, einen Anschlussabschnitt, an den eine Schienenfahrzeugkomponente anschließbar ist und der aus einem korrosionsbeständigen Stahl, insbesondere austenitischen Stahl oder Duplex-Stahl, besteht, und ein Aluminiumvollbolzenelement, das vor dem Verschweißen unter Bildung des Anschlussabschnitts mit einer Korrosionsschutzschicht aus dem genannten korrosionsbeständigen Stahl beschichtet wird, wobei der Schnittstellenabschnitt des Aluminiumvollbolzenelements unbeschichtet bleibt, aufweist und der Bolzen mit seinem Schnittstellenabschnitt an den Wagenkasten angeschweißt ist.

Bezüglich der Vorteile der erfindungsgemäßen Anordnung und deren vorteilhafter Ausgestaltungen sei auf die obigen Ausführungen im Zusammenhang mit dem erfindungsgemäßen Verfahren und dessen vorteilhafter Ausgestaltungen verwiesen.

Die Erfindung bezieht sich darüber hinaus auf ein Schienenfahrzeug mit einem Wagenkasten und einem daran angebrachten Anschlusselement. Erfindungsgemäß ist bezüglich eines solchen Schienenfahrzeugs vorgesehen, dass das Schienenfahrzeug eine Anordnung, wie beschrieben, aufweist.

Die Erfindung wird nachfolgend anhand von Ausführungsbeispielen näher erläutert; dabei zeigen beispielhaft
- Figur 1: in einer vereinfachten Darstellung einen Abschnitt eines Wagenkastens eines Schienenfahrzeugs, an den eine aus dem Stand der Technik vorbekannte Cupallasche sowie zum Vergleich ein erfindungsgemäßer Bolzen angeschweißt sind,
- Figur 2: ein Ausführungsbeispiel für eine vorteilhafte Ausgestaltung des Bolzens gemäß Figur 1 näher im Detail, wobei der Bolzen gemäß Figur 2 durch ein Aluminiumvollbolzenelement mit einer darauf befindlichen Korrosionsschutzschicht aus Stahl gebildet ist,
- Figur 3: ein weiteres Ausführungsbeispiel für eine vorteilhafte Ausgestaltung des Bolzens gemäß Figur 1 näher im Detail, wobei der Bolzen gemäß Figur 3 zwei miteinander verbundene Teile umfasst, nämlich ein Aluminiumteil und ein Stahlteil, die miteinander verschweißt sind,
- Figur 4: noch ein weiteres Ausführungsbeispiel für eine vorteilhafte Ausgestaltung des Bolzens gemäß Figur 1 näher im Detail, wobei der Bolzen gemäß Figur 4 zwei miteinander verbundene Teile umfasst, nämlich ein Aluminiumteil und ein Stahlteil, die miteinander verklemmt sind, und
- Figuren 5-7: anhand verschiedener Darstellungen eine bevorzugte Formgestaltung der in den Figuren 1 bis 4 gezeigten Bolzen.

In den Figuren werden der Übersicht halber für identische oder vergleichbare Komponenten stets dieselben Bezugszeichen verwendet.

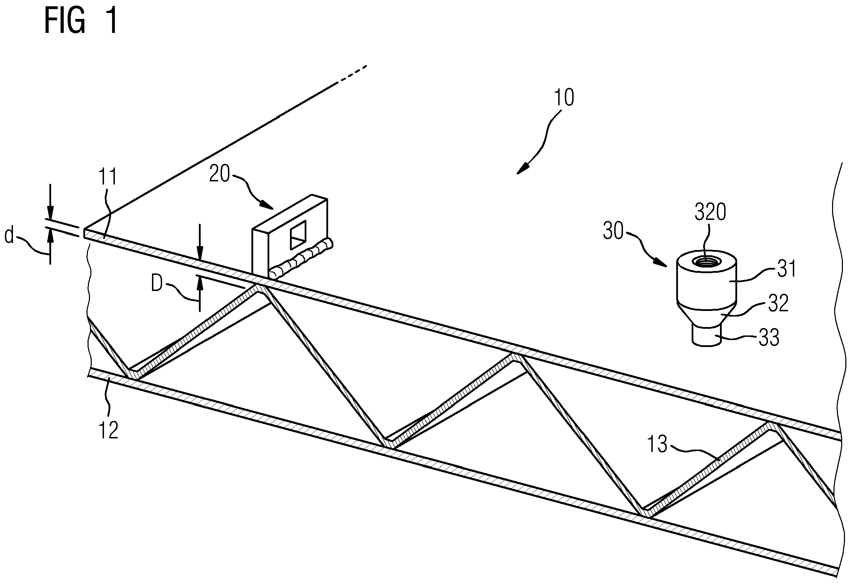

Die Figur 1 zeigt in einer schematischen dreidimensionalen Darstellung einen Abschnitt eines Wagenkastens 10 eines nicht weiter dargestellten Schienenfahrzeugs. Man erkennt zwei parallele Bleche 11 und 12, die durch innenliegende Verstärkungselemente 13 miteinander verbunden sind.

Im linken Bereich der Figur 1 sieht man eine herkömmliche Cupallasche 20, die auf dem in der Figur 1 oberen der zwei parallelen Bleche 11 angeschweißt ist. Aufgrund ihrer Geometrie kann die Cupallasche 20 nicht an beliebiger Stelle auf dem mit der Dicke d relativ dünnen oberen Blech 11 (d üblicherweise circa 2 mm) angeschweißt werden, denn nur in verstärkten Bereichen - also solchen, die oberhalb der Verstärkungselemente 13 liegen - ist eine ausreichende Materialdicke D (D üblicherweise circa 4 mm) und damit eine ausreichende thermische Stabilität vorhanden, die ein beschädigungsfreies Aufschweißen der Cupallasche 20 ermöglicht.

Im rechten Bereich der Figur 1 sieht man in einer schematischen Darstellung ein Ausführungsbeispiel für einen erfindungsgemäßen Bolzen 30, der ebenfalls auf dem oberen Blech 11 angeschweißt ist. Im Unterschied zu der Cupallasche 20 kann der Bolzen 30 an beliebiger Stelle auf dem oberen Blech 11 angeschweißt werden, da bei dem Bolzen 30 die thermische Belastung - aufgrund seiner Geometrie und des bei diesem im Unterschied zur Cupallasche möglichen Bolzenschweißverfahrens - deutlich geringer als bei der Cupallasche 20 ist. Bei einem Bolzenschweißverfahren wird der Strom zum Erhitzen der zu verschweißenden Teile direkt durch den Bolzen geführt, sodass der Bolzen selbst als aktive Schweißelektrode arbeitet, also somit kein rein passives Element ist, das von einer aktiven anderen Schweißelektrode eines Schweißgeräts passiv verschweißt wird.

Der Bolzen 30 umfasst einen oberen Anschlussabschnitt 31, der zum Anbringen einer Schienenfahrzeugkomponente dient. Bei dem Bolzen 30 kann es sich beispielsweise um einen Erdungsbolzen handeln, bei dem als Schienenfahrzeugkomponente ein Erdungskabel angeschlossen, insbesondere durch Einschrauben einer Schraube in ein Innengewinde 320 des Anschlussabschnitts 31 des Bolzens 30, angeschraubt wird. Alternativ zu einem Erdungskabel können auch andere Schienenfahrzeugkomponenten mit dem Bolzen 30 verbunden werden, beispielsweise Geräte jeglicher Art, Gepäckablagen, Verkleidungsteile oder dergleichen; letztgenannter Aspekt kann beispielsweise von Interesse sein, wenn der Bolzen 30 an ein für den Innenbereich des Wagenkastens 10 vorgesehenes Blech 11 angeschweißt wird.

Darüber hinaus weist der Bolzen 30 einen von dem Anschlussabschnitt 31 durch einen Verbindungsabschnitt 32 getrennten Schnittstellenabschnitt 33 auf, der zum Anschweißen dient.

Im Verbindungsabschnitt 32 besteht der Bolzen 30 aus Aluminium und im Anschlussabschnitt 31 aus einem korrosionsbeständigen Stahl wie beispielsweise aus einem austenitischen Stahl oder Duplex-Stahl.

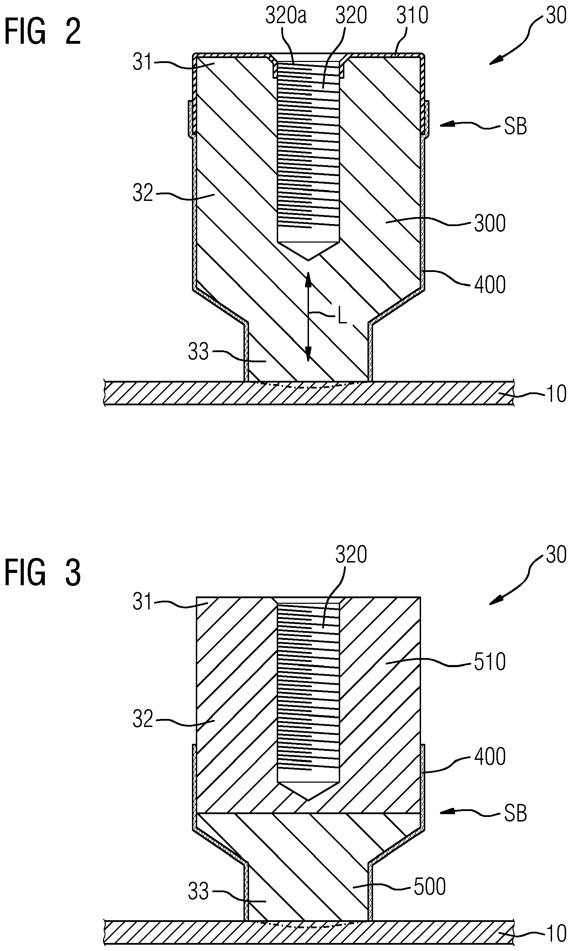

Die Figur 2 zeigt eine vorteilhafte Ausgestaltung des Bolzens 30 gemäß Figur 1 näher im Detail. Bei dieser Ausführungsvariante umfasst der Bolzen 30 einen inneren Kern in Form eines Aluminiumvollbolzenelements 300, das vor dem Verschweißen mit dem Wagenkasten 10 unter Bildung des Anschlussabschnitts 31 mit einer Korrosionsschutzschicht 310 aus korrosionsbeständigem Stahl beschichtet worden ist. Bei dem Beschichten bleibt der untere Schnittstellenabschnitt 33 des Aluminiumvollbolzenelements 300 unbeschichtet.

Das Aufbringen des korrosionsbeständigen Stahls erfolgt vorzugsweise durch Plasmabeschichten, Laserbeschichten oder Drucken.

Die Figur 2 lässt darüber hinaus das Innengewinde 320 erkennen, das im Bereich des oberen stahlbeschichteten Anschlussabschnitts 31 zugänglich ist und sich in Bolzenlängsrichtung L in das Innere des Aluminiumvollbolzenelements 300 hineinerstreckt. Das Innengewinde 320 ermöglicht das Einschrauben von Befestigungselementen wie beispielsweise einer Schraube zum Zwecke des Anbringens einer Schienenfahrzeugkomponente.

Beim Beschichten des Aluminiumvollbolzenelements 300 mit dem korrosionsbeständigen Stahl wird vorzugsweise zumindest der obere Bereich 320a des Innengewindes 320, zumindest aber die oberste Gewindeumdrehung des Innengewindes 320, mit Stahl mitbeschichtet, um auch dort eine Korrosionsbeständigkeit zu gewährleisten, falls diese von dem eingeschraubten Befestigungselement allein nicht ausreichend gewährleistet werden sollte.

Die Figur 2 zeigt den Bolzen 30 nach dem Anschweißen am Wagenkasten 10. Um einen Korrosionsschutz des Aluminiumvollbolzenelements 300 außerhalb des stahlbeschichteten Anschlussabschnitts 31 zu gewährleisten, wird nach dem Anschweißen eine Lackschicht 400 aufgebracht. Die Lackschicht 400 überlappt die Schnittstelle bzw. den Schnittstellenbereich SB zwischen dem stahlfreien Abschnitt des Aluminiumvollbolzenelements 300 und dem stahlbeschichteten Bereich des Aluminiumvollbolzenelements 300, wodurch sichergestellt wird, dass das Aluminiumvollbolzenelement 300 komplett eingehüllt wird, sei es durch die Lackschicht 400 oder im Anschlussabschnitt 31 durch den korrosionsbeständigen Stahl bzw. die Korrosionsschutzschicht 310.

Der stahlbeschichtete Anschlussabschnitt 31 wird dabei aber vorzugsweise nicht vollständig mit Lack beschichtet, sondern bleibt - abgesehen von dem gewünschten Überlappungsbereich - vorzugsweise unbeschichtet, um eine elektrische Anbindung an den Anschlussabschnitt 31 und damit eine elektrische Verbindung über den Bolzen 30 mit dem Wagenkasten 10 zu ermöglichen.

Die Figur 3 zeigt eine zweite vorteilhafte Ausgestaltung des Bolzens 30 gemäß Figur 1 näher im Detail. Bei der Ausgestaltung gemäß Figur 3 ist der Bolzen 30 zweiteilig ausgeführt und umfasst ein unteres Aluminiumteil 500, das den Schnittstellenabschnitt 33 des Bolzens 30 bildet. Ein in der Figur 3 darüber befindliches Stahlteil 510 aus korrosionsbeständigem Stahl bildet den Anschlussabschnitt 31 des Bolzens 30. Aneinander angrenzende Abschnitte der beiden Teile 500 und 510 bilden gemeinsam den Verbindungsabschnitt 32 des Bolzens 30 gemäß Figur 1.

Das Innengewinde 320, das ein Anschrauben einer nicht gezeigten Schienenfahrzeugkomponente am Bolzen 30 und damit am Wagenkasten 10 ermöglicht, erstreckt sich bei dem Ausführungsbeispiel gemäß Figur 3 nur innerhalb des Stahlteils 510; das Aluminiumteil 500 ist innengewindefrei.

Die Figur 3 zeigt den Bolzen 30 nach dem Aufschweißen auf dem Wagenkasten 10 bzw. Wagenkastenrohbau. Nach dem Anschweißen des Bolzens 30 wird vorzugsweise eine Lackschicht 400 aufgebracht, wie dies im Zusammenhang mit dem Ausführungsbeispiel gemäß Figur 2 erläutert worden ist. Die Lackschicht 400 erstreckt sich dabei über den Schnittstellenbereich SB zwischen dem Aluminiumteil 500 und dem Stahlteil 510, sodass die Lackschicht 400 zumindest im Schnittstellenbereich SB auch das Stahlteil 510 abdeckt. Außerhalb des Schnittstellenbereichs SB bleibt das Stahlteil 510 vorzugsweise unlackiert, um eine elektrische Kontaktierung des Stahlteils 510 und damit des Wagenkastens 10 mittels des Bolzens 30 zu ermöglichen.

Bei dem Ausführungsbeispiel gemäß Figur 3 sind das Aluminiumteil 500 und das Stahlteil 510 miteinander verschweißt. Vorteilhaft ist es, eine Verbindung zwischen dem Stahlteil 510 und dem Aluminiumteil 500 durch Reibschweißen herbeizuführen, da eine solche Verbindungstechnik mit geringem Aufwand, aber dennoch sehr hoher Qualität durchführbar ist. Bei Reibschwei-ßen werden die beiden Teile 500 und 510 relativ zueinander gedreht, indem beispielsweise eines der Teile festgehalten und das andere gedreht wird; durch Reibungshitze im Schnittstellenbereich SB wird die Schweißverbindung hergestellt.

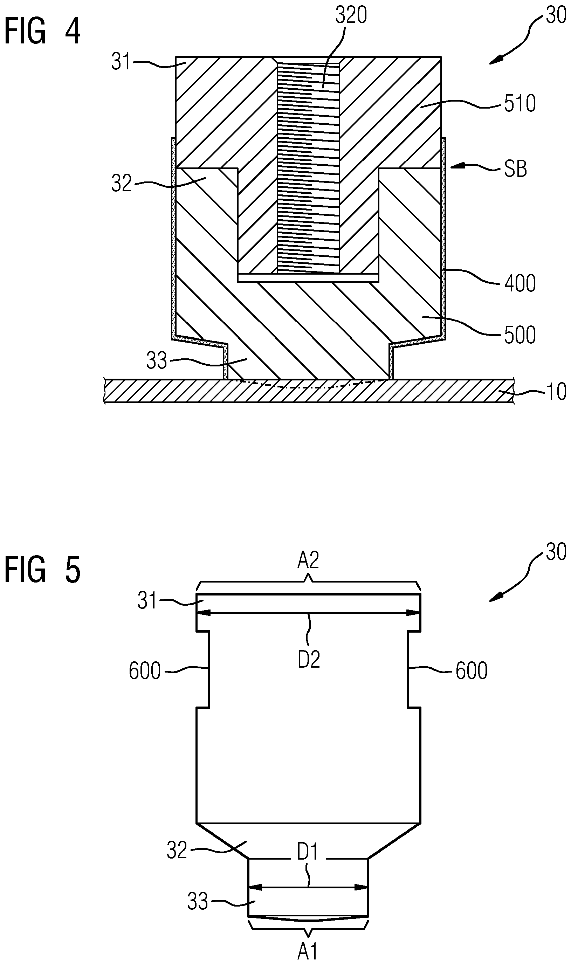

Die Figur 4 zeigt eine dritte vorteilhafte Ausgestaltung des Bolzens 30 gemäß Figur 1 näher im Detail. Bei der Ausgestaltung gemäß Figur 4 sind das Aluminiumteil 500 und das Stahlteil 510 nicht miteinander verschweißt, sondern miteinander verklemmt worden: Ein solches Verklemmen kann beispielsweise erreicht werden, indem eines der beiden Teile, beispielsweise das Stahlteil 510, in das andere der beiden Teile, beispielweise das Aluminiumteil 500, eingepresst oder bei unterschiedlichen Teiletemperaturen ineinandergesetzt wird, wobei bei letztgenannter Variante ein Verklemmen bei Temperaturangleichung erfolgt.

Alternativ kann ein Verklemmen durch Verschrauben erfolgen, indem eines der beiden Teile, beispielsweise das Stahlteil 510, in das andere der beiden Teile, beispielsweise das Aluminiumteil 500, eingeschraubt wird.

Nach dem Verbinden der beiden Teile 500 und 510 wird der so gebildete Bolzen 30 dann auf dem Wagenkasten 10 angeschweißt. Nach dem Anschweißen wird wiederum eine Lackschicht 400 aufgebracht, wie dies im Zusammenhang mit den Figuren 2 und 3 bereits erläutert worden ist. Beim Aufbringen der Lackschicht 400 bzw. beim Lackieren wird von dem Stahlteil 510 vorzugsweise nur der an die Schnittstelle SB zwischen den beiden Teilen heranragende, also der nahe (schnittstellennahe) Bereich des Stahlteils 510 lackiert, der ferne (schnittstellenferne) Bereich des Stahlteils 510 bleibt vorzugsweise unlackiert, um einen elektrischen Anschluss bzw. eine gut leitende elektrische Kontaktierung zu ermöglichen.

Die Figuren 5 bis 7 zeigen eine bevorzugte Formgestaltung für die in den Figuren 1 bis 4 gezeigten Bolzen 30.

In der Figur 5 lässt sich erkennen, dass der Bolzen 30, bei dem es sich vorzugsweise um einen Großflanschbolzen handelt, im Schnittstellenabschnitt 33 vorzugsweise zylindrisch ist und dort einen ersten Querschnitt A1 und einen ersten Durchmesser D1 aufweist. Im Kopfbereich des Anschlussabschnitts 31 ist der Bolzen 30 vorzugsweise ebenfalls zylindrisch und weist dort einen zweiten Querschnitt A2 und einen zweiten Durchmesser D2 auf. Die Querschnitte A1 und A2 sind vorzugsweise kreisförmig, sie können aber auch andere Formen aufweisen.

Der zweite Durchmesser D2, also der Kopfdurchmesser des Bolzens im Anschlussabschnitt 31, liegt vorzugsweise in einem Bereich zwischen 30 mm und 40 mm.

Der erste Durchmesser D1, also der Fußdurchmesser im Schnittstellenabschnitt 33, liegt vorzugsweise in einem Bereich zwischen 10 mm und 20 mm.

Der Schnittstellenabschnitt 33 und der Anschlussabschnitt 31 sind durch einen konischen Verbindungsabschnitt 32 verbunden.

Im Verbindungsabschnitt 32 und/oder im Anschlussabschnitt 31 ist vorzugsweise eine werkzeuggerechte Flächengestaltung, beispielsweise in Form zumindest zweier paralleler Flächen, vorhanden, die einen Werkzeuganschlussabschnitt zum Anbringen beispielsweise eines Maulschlüssels oder eines anderen Werkzeugs bilden. Der durch die Formgestaltung gebildete Werkzeuganschlussabschnitt ist in der Figur 5 mit dem Bezugszeichen 600 gekennzeichnet.

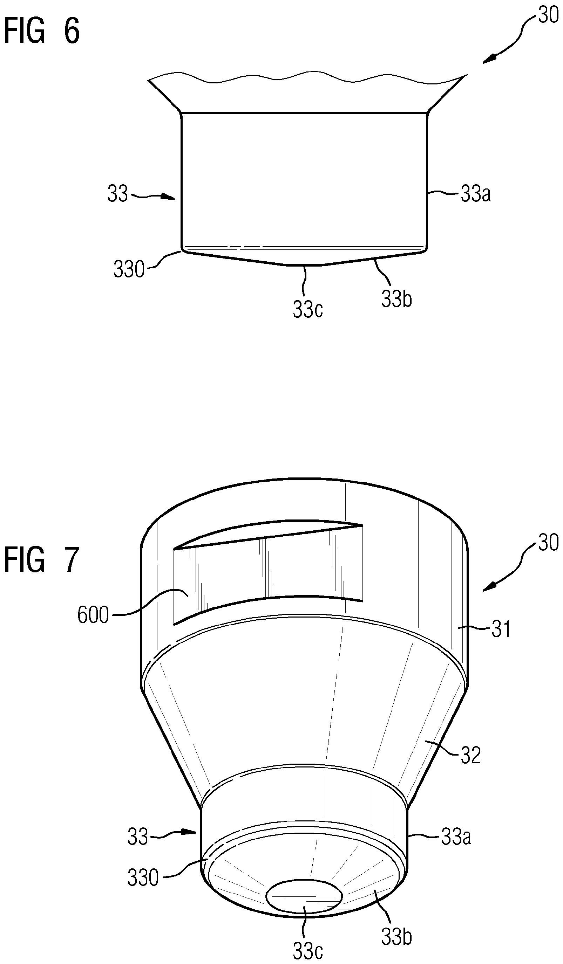

Die Figur 6 zeigt den Schnittstellenabschnitt 33 des Bolzens 30 gemäß Figur 5 näher im Detail. Es lässt sich erkennen, dass der Schnittstellenabschnitt 33 vor dem Schweißen in seinem späteren Schweißbereich eine ringförmig umlaufende Außenrandfläche 330 aufweist, die abgerundet ist und einen zylindrischen Unterabschnitt 33a des Schnittstellenabschnitts 33 und einen konischen Unterabschnitt 33b des Schnittstellenabschnitts 33 verbindet. An den konischen Unterabschnitt 33b schließt sich ein Auflageunterabschnitt 33c an, der beim Aufsetzen des Bolzens 30 auf dem Wagenkasten 10 zum Zwecke des Verschweißens beim Starten des Schweißvorgangs die erste elektrische Kontaktstelle bildet.

Die Figur 7 zeigt den Bolzen 30 gemäß den Figuren 5 und 6 in einer dreidimensionalen Darstellung schräg von der Seite. Es lässt sich die abgerundete, ringförmig umlaufende Außenrandfläche 330 zwischen den Unterabschnitten 33a und 33b gut erkennen. Der Rundungsradius der Rundung der abgerundeten Au-ßenrandfläche 330 beträgt vorzugsweise zumindest 1 mm und liegt vorzugsweise zwischen 2 mm und 4 mm. Die Rundung in der ringförmig umlaufenden Außenrandfläche 330 reduziert die Blaswirkung beim Schweißen durch eine Konzentration bzw. Reduktion der Aufweitung des elektromagnetischen Feldes im Bereich der zu bildenden Schweißnaht zwischen Bolzen 30 und Wagenkasten 10.

Der Bolzen wird vorzugsweise als Erdungsbolzen eingesetzt, indem an diesen als Schienenfahrzeugkomponente ein Erdungskabel angeschlossen wird, insbesondere durch Einschrauben einer Schraube in das Innengewinde des Anschlussabschnitts 31 des Bolzens 30. Alternativ können die Bolzen auch zum Anbringen anderer Schienenfahrzeugkomponenten dienen, beispielsweise für Verkleidungsteile, Geräte oder Gepäckablagen.

Bolzen, die mit einem Fußdurchmesser über 14 mm in der beschriebenen Weise auf 3 mm dicke Bleche aufgeschweißt werden, können - wie erfinderseitig festgestellt wurde, in vorteilhafter Weise Zugkräfte über 8 kN übertragen, woraus sich die genannten, aber auch viele weitere Anwendungsmöglichkeiten ableiten lassen.

## Patentansprüche

1. Verfahren zum Herstellen einer Anordnung, die einen Wagenkasten (10) eines Schienenfahrzeugs und ein daran angebrachtes Anschlusselement umfasst,
- wobei als das Anschlusselement ein Bolzen (30) angebracht wird und
- wobei der Bolzen (30) einen Schnittstellenabschnitt (33), der aus Aluminium besteht und zum Anbringen an dem Wagenkasten (10) dient, und einen Anschlussabschnitt (31), der aus einem korrosionsbeständigen Stahl besteht und zum Anbringen einer Schienenfahrzeugkomponente dient, umfasst,
- wobei der Bolzen (30) mit seinem Schnittstellenabschnitt (33) im Rahmen eines Schweißverfahrens an den Wagenkasten (10) angeschweißt wird,
**dadurch gekennzeichnet, dass**
- der Bolzen (30) ein Aluminiumvollbolzenelement (300) umfasst, das vor dem Verschweißen unter Bildung des Anschlussabschnitts (31) mit einer Korrosionsschutzschicht aus dem korrosionsbeständigen Stahl beschichtet wird, wobei der Schnittstellenabschnitt (33) des Aluminiumvollbolzenelements (300) unbeschichtet bleibt.

2. Verfahren nach Anspruch 1,
**dadurch gekennzeichnet, dass**
der korrosionsbeständige Stahl ein austenitischer Stahl oder Duplex-Stahl ist.

3. Verfahren nach einem der voranstehenden Ansprüche,
**dadurch gekennzeichnet, dass**
der Bolzen (30) mit seinem Schnittstellenabschnitt (33) im Rahmen eines Bolzenschweißverfahrens an ein Blech, insbesondere Aluminiumblech, des Wagenkastens (10) angeschweißt wird.

4. Verfahren nach einem der voranstehenden Ansprüche,
**dadurch gekennzeichnet, dass**
das Beschichten durch Plasmabeschichten, Laserbeschichten oder Drucken erfolgt.

5. Verfahren nach einem der voranstehenden Ansprüche,
**dadurch gekennzeichnet, dass**
- das Aluminiumvollbolzenelement (300) im Bereich des stahlbeschichteten Anschlussabschnitts (31) ein Innengewinde (320) aufweist, dass in das Aluminiumvollbolzenelement (300) in Bolzenlängsrichtung (L) hineinragt, und
- das Innengewinde (320) zumindest im Bereich der obersten Gewindeumdrehung mit dem korrosionsbeständigen Stahl mitbeschichtet wird.

6. Verfahren nach einem der voranstehenden Ansprüche,
**dadurch gekennzeichnet, dass**
- nach dem Anschweißen des Bolzens (30) an den Wagenkasten (10) der unbeschichtete Abschnitt des Aluminiumvollbolzenelements (300), die Schnittstelle (SB) zwischen dem stahlbeschichteten und dem unbeschichteten Abschnitt des Aluminiumvollbolzenelements (300) sowie der an die Schnittstelle (SB) heranragende, nahe Bereich des stahlbeschichteten Abschnitts des Aluminiumvollbolzenelements (300) lackiert wird,
- wobei der durch den nahen Bereich von der Schnittstelle (SB) getrennte ferne Bereich des stahlbeschichteten Aluminiumvollbolzenelements (300) unlackiert bleibt.

7. Verfahren nach einem der voranstehenden Ansprüche,
**dadurch gekennzeichnet, dass**
- der Bolzen (30) zumindest zweiteilig ist und aufweist:
- ein Aluminiumteil (500), das den Schnittstellenabschnitt (33) des Bolzens (30) umfasst oder bildet, und
- ein Stahlteil (510) aus dem korrosionsbeständigen Stahl, der den Anschlussabschnitt (31) des Bolzens (30) umfasst oder bildet.

8. Verfahren nach Anspruch 7,
**dadurch gekennzeichnet, dass**
- nach dem Anschweißen des Bolzens (30) an dem Wagenkasten (10) das Aluminiumteil (500), die Schnittstelle (SB) zwischen dem Aluminiumteil (500) und dem Stahlteil (510) sowie der an die Schnittstelle (SB) heranragende, nahe Bereich des Stahlteils (510) lackiert wird,
- wobei der durch den nahen Bereich von der Schnittstelle (SB) getrennte ferne Bereich des Stahlteils (510) unlackiert bleibt.

9. Verfahren nach einem der voranstehenden Ansprüche 7 bis 8,
**dadurch gekennzeichnet, dass**
das Aluminiumteil (500) und das Stahlteil (510) durch Schwei-ßen, insbesondere Reibschweißen, verbunden werden, bevor der dadurch gebildete Bolzen (30) an den Wagenkasten (10) angeschweißt wird.

10. Verfahren nach einem der voranstehenden Ansprüche 7 bis 8,
**dadurch gekennzeichnet, dass**
das Aluminiumteil (500) und das Stahlteil (510) miteinander verschraubt oder verklemmt werden, bevor der Bolzen (30) an den Wagenkasten (10) angeschweißt wird.

11. Verfahren nach einem der voranstehenden Ansprüche,
**dadurch gekennzeichnet, dass**
- der Schnittstellenabschnitt (33) zumindest abschnittsweise zylindrisch ist und dort einen ersten Querschnitt (A1) aufweist,
- der Anschlussabschnitt (31) zumindest abschnittsweise zylindrisch ist und dort einen zweiten Querschnitt (A2), der flächenmäßig größer als der erste Querschnitt (A1) ist, aufweist und
- zwischen dem Schnittstellenabschnitt (33) und dem Anschlussabschnitt (31) ein konischer Verbindungsabschnitt (32) angeordnet ist.

12. Verfahren nach einem der voranstehenden Ansprüche,
**dadurch gekennzeichnet, dass**
- der Schnittstellenabschnitt (33) des Bolzens (30) vor dem Schweißen in seinem späteren Schweißbereich eine ringförmig umlaufende Außenrandfläche (330) aufweist, die abgerundet ist und einen zylindrischen Unterabschnitt (33a) des Schnittstellenabschnitts (33) und einen konischen Unterabschnitt (33b) des Schnittstellenabschnitts (33) verbindet, und
- unter Einbezug des Aluminiummaterials im Bereich der abgerundeten Außenrandfläche (330) beim Schweißen eine umlaufende Aluminiumschweißnaht gebildet oder zumindest mitgebildet wird.

13. Anordnung, die einen Wagenkasten (10) eines Schienenfahrzeugs und ein daran angebrachtes Anschlusselement umfasst, oder Schienenfahrzeug mit einer solchen Anordnung,
- wobei das Anschlusselement ein Bolzen (30) ist und
- der Bolzen (30)
- einen Schnittstellenabschnitt (33), der aus Aluminium besteht und an dem Wagenkasten (10) angebracht ist, und
- einen Anschlussabschnitt (31), an den die Schienenfahrzeugkomponente anschließbar ist und der aus einem korrosionsbeständigen Stahl, insbesondere austenitischen Stahl oder Duplex-Stahlt, besteht, umfasst,
**dadurch gekennzeichnet, dass**
- der Bolzen (30) ein Aluminiumvollbolzenelement (300), das vor dem Verschweißen unter Bildung des Anschlussabschnitts (31) mit einer Korrosionsschutzschicht aus dem korrosionsbeständigen Stahl beschichtet wird, wobei der Schnittstellenabschnitt (33) des Aluminiumvollbolzenelements (300) unbeschichtet bleibt, umfasst und
- der Bolzen (30) mit seinem Schnittstellenabschnitt (33) an den Wagenkasten (10) angeschweißt ist.

## Claims

1. Method for manufacturing an assembly which comprises a vehicle body (10) of a rail vehicle and a connecting element attached thereto,
- wherein a bolt (30) is attached as the connecting element, and
- wherein the bolt (30) comprises an interface section (33), which consists of aluminium and is used for attachment to the vehicle body (10), and a connecting section (31) which consists of a corrosion-resistant steel and is used for attaching a rail vehicle component,
- wherein the bolt (30) with its interface section (33) is welded to the vehicle body (10) within the scope of a welding method
**characterised in that**
- the bolt (30) comprises an aluminium solid bolt element (300), which, before welding by forming the connecting section (31), is coated with a corrosion protection layer made from corrosion-resistant steel, wherein the interface section (33) of the aluminium solid bolt element (300) remains uncoated.

2. Method according to claim 1,
**characterised in that**
the corrosion-resistant steel is an austenitic steel or Duplex steel.

3. Method according to one of the preceding claims,
**characterised in that**
the bolt (30) with its interface section (33) is welded to a metal sheet, in particular aluminium sheet, of the vehicle body (10) within the scope of a bolt welding method.

4. Method according to one of the preceding claims,
**characterised in that**
the coating is carried out by plasma coating, laser coating or printing.

5. Method according to one of the preceding claims,
**characterised in that**
- the aluminium solid bolt element (300) has an inner thread (320), in the region of the steel-coated connecting section (31), that projects into the aluminium solid bold element (300) in the bolt longitudinal direction (L) and
- the inner thread (320) is coated together with the corrosion-resistant steel at least in the region of the topmost thread rotation.

6. Method according to one of the preceding claims,
**characterised in that**
- after welding the bolt (30) to the vehicle body (10), the uncoated section of the aluminium solid bolt element (300), the interface (SB) between the steel-coated and the uncoated section of the aluminium solid bolt element (300) and the close region of the steel-coated section of the aluminium solid bolt element (300) approaching the interface (SB) is painted,
- wherein the remote region of the steel-coated aluminium solid bolt element (300) which is separated from the interface (SB) by the close region remains unpainted.

7. Method according to one of the preceding claims,
**characterised in that**
- the bolt (30) is at least two-part and has:
- an aluminium part (500), which comprises or forms the interface section (33) of the bolt (30), and
- a steel part (510) from the corrosion-resistant steel, which comprises or forms the connecting section (31) of the bolt (30).

8. Method according to claim 7,
**characterised in that**
- after welding the bolt (30) to the vehicle body (10), the aluminium part (500), the interface (SB) between the aluminium part (500) and the steel part (510) and the close region of the steel part (510) approaching the interface (SB) is painted,
- wherein the remote region of the steel part (510) separated from the interface (SB) by the close region remains unpainted.

9. Method according to one of the preceding claims 7 to 8,
**characterised in that**
the aluminium part (500) and the steel part (510) are connected by means of welding, in particular friction welding, before the bolt (30) formed as a result is welded to the vehicle body (10).

10. Method according to one of the preceding claims 7 to 8,
**characterised in that**
the aluminium part (500) and the steel part (510) are screwed or clamped to one another before the bolt (30) is welded to the vehicle body (10).

11. Method according to one of the preceding claims,
**characterised in that**
- the interface section (33) is cylindrical at least in sections and has a first cross-section (A1) there,
- the connecting section (31) is cylindrical at least in sections and has a second cross-section (A2) there which is larger than the first cross-section (A1) in terms of area and
- a conical connecting section (32) is arranged between the interface section (33) and the connecting section (31).

12. Method according to one of the preceding claims,
**characterised in that**
- the interface section (33) of the bolt (30) has a ringshaped peripheral outer edge surface (330) upstream of the welding in a subsequent welding region, which is rounded and connects a cylindrical subsection (33a) of the interface section (33) and a conical subsection (33b) of the interface section (33), and
- by including the aluminium material in the region of the rounded outer edge surface (330) during welding, a peripheral aluminium welded seam is formed or at least formed therewith.

13. Assembly, which comprises a vehicle body (10) of a rail vehicle and a connecting element attached thereto or rail vehicle with such an assembly,
- wherein the connecting element is a bolt (30) and
- the bolt (30)
- comprises an interface section (33), which consists of aluminium and is attached to the vehicle body (10), and
- a connecting section (31), to which the rail vehicle component can be connected and which consists of a corrosion-resistant steel, in particular austenitic steel or Duplex steel,
**characterised in that**
- the bolt (30) comprises an aluminium solid bolt element (300) which, before welding by forming the connecting section (31), is coated with a corrosion protection layer made from the corrosion-resistant steel, wherein the interface section (33) of the aluminium solid bolt element (300) remains uncoated, and
- the bolt (30) is welded to the vehicle body (10) with its interface section (33).

## Revendications

1. Procédé de fabrication d'un ensemble, qui comprend une caisse (10) d'un véhicule ferroviaire et un élément de raccordement qui y est monté,
- dans lequel on monte un boulon (30) comme élément de raccordement et
- dans lequel le boulon (30) comprend une partie (33) d'interface, qui est en aluminium et qui sert au montage sur la caisse (10), et une partie (31) de raccordement, qui est en acier résistant à la corrosion et qui sert au montage d'un composant de véhicule ferroviaire,
- dans lequel le boulon (30) est soudé à la caisse (10) par sa partie (33) d'interface dans le cadre d'un procédé de soudage,
**caractérisé en ce que**
- le boulon (30) comprend un élément (300) de boulon plein en aluminium, que l'on revêt avant le soudage, avec formation de la partie (31) de raccordement, d'une couche de protection vis-à-vis de la corrosion en acier résistant à la corrosion, dans lequel la partie (33) d'interface de l'élément (300) de boulon plein en aluminium reste non revêtue.

2. Procédé suivant la revendication 1,
**caractérisé en ce que**
l'acier résistant à la corrosion est un acier austénitique ou un acier duplex.

3. Procédé suivant l'une des revendications précédentes,
**caractérisé en ce que** l'
on soude le boulon (30) par sa partie (33) d'interface dans le cadre d'un procédé de soudage de boulon à une tôle, en particulier à une tôle d'aluminium de la caisse (10).

4. Procédé suivant l'une des revendications précédentes,
**caractérisé en ce que** le revêtement s'effectue par revêtement au plasma, revêtement au laser ou par pression.

5. Procédé suivant l'une des revendications précédentes,
**caractérisé en ce que**
- l'élément (300) de boulon plein en aluminium a un taraudage (320) dans la région de la partie (31) de raccordement revêtu d'acier, qui pénètre dans la direction (L) longitudinale du boulon dans l'élément (300) de boulon plein en aluminium, et
- le taraudage (320) est revêtu de l'acier résistant à la corrosion au moins dans la région de révolution taraudée la plus haute.

6. Procédé suivant l'une des revendications précédentes,
**caractérisé en ce que**
- après le soudage du boulon (30) à la caisse (10), on vernit la partie non revêtue de l'élément (300) de boulon plein en aluminium, l'interface (SB) entre la partie revêtue d'aluminium et la partie non revêtue de l'élément (300) de boulon plein en aluminium ainsi que la région proche faisant saillie de l'interface (SB) de la partie revêtue d'acier de l'élément (300) de boulon plein en aluminium,
- dans lequel la région loin, séparée de la région proche de l'interface (SB), de l'élément (300) de boulon plein en aluminium ou revêtu d'acier reste non vernie.

7. Procédé suivant l'une des revendications précédentes,
**caractérisé en ce que**
- le boulon (30) est au moins en deux parties et a :
- une partie (500) en aluminium, qui comprend ou forme la partie (33) d'interface du boulon (30), et
- une partie (510) d'acier en acier résistant à la corrosion, qui comprend ou forme la partie (31) de raccordement du boulon (30) .

8. Procédé suivant la revendication 7,
**caractérisé en ce que**
- après le soudage du boulon (30) à la caisse (10), on vernit la partie (500) en aluminium, l'interface (SB) entre la partie (500) en aluminium et la partie (510) d'acier ainsi que la région de la partie (510) d'acier proche, faisant saillie de l'interface (SB),
- dans lequel la région loin, séparée de l'interface (SB) par la région proche, de la partie (510) d'acier reste non vernie.

9. Procédé suivant l'une des revendications 7 à 8 précédentes,
**caractérisé en ce que** l'
on relie la partie (500) en aluminium et la partie (510) d'acier par soudage, en particulier par soudage, par frottement, avant de souder le boulon (30) ainsi formé à la caisse (10).

10. Procédé suivant l'une des revendications 7 à 8 précédentes,
**caractérisé en ce que** l'
on visse ou l'on colle entre elles la partie (500) en aluminium et la partie (510) d'acier avant de souder le boulon (30) à la caisse (10).

11. Procédé suivant l'une des revendications précédentes,
**caractérisé en ce que**
- la partie (33) d'interface est cylindrique au moins par endroit et y a une première section (A1) transversale,
- la partie (31) de raccordement est cylindrique au moins par endroit et y a une deuxième section (A2) transversale, qui est plus grande que la première section (A1) transversale, et
- entre la partie (33) d'interface et la partie (31) de raccordement, est disposée une partie (32) conique de liaison.

12. Procédé suivant l'une des revendications précédentes,
**caractérisé en ce que**
- la partie (33) d'interface du boulon (30) a, avant le soudage, dans sa partie de soudure ultérieure, une surface (330) marginale extérieure annulaire faisant le tour, qui est arrondie et relie une partie (33a) inférieure cylindrique de la partie (33) d'interface et une partie (33b) inférieure conique de la partie (33) d'interface, et
- avec incorporation du matériau d'aluminium dans la région de la surface (330) marginale extérieure arrondie, on forme, lors du soudage, un cordon de soudure en aluminium faisant le tour ou du moins on le forme en même temps.

13. Ensemble, qui comprend une caisse (10) d'un véhicule ferroviaire et un élément de raccordement qui est monté ou véhicule ferroviaire ayant un ensemble de ce genre,
- dans lequel l'élément de raccordement est un boulon (30) et
- le boulon (30)
- comprend une partie (33) d'interface, qui est en aluminium et est montée sur la caisse (10), et
- une partie (31) de raccordement, à laquelle le composant de véhicule ferroviaire peut être raccordé et qui est en acier résistant à la corrosion, notamment en acier austénitique ou en acier duplex,
**caractérisé en ce que**
- le boulon (30) comprend un élément (300) de boulon plein en aluminium, qui est revêtu avant le soudage avec formation de la partie (31) de raccordement d'une couche de protection vis-à-vis de la corrosion en acier résistant à la corrosion, dans lequel la partie (33) d'interface de l'élément (300) de boulon plein en aluminium reste non revêtue, et
- le boulon (30) est, par sa partie (33) d'interface, soudé à la caisse (10).
